**Europäisches Patentamt**

**European Patent Office**

**Office européen des brevets**

(19)

(11) Numéro de publication: **0 034 379**
**A1**

(12) # DEMANDE DE BREVET EUROPEEN

(21) Numéro de dépôt: **81200034.7**

(22) Date de dépôt: **13.01.81**

(51) Int. Cl.³: **C 21 C 7/076**

(30) Priorité: **17.01.80 LU 82092**
**21.02.80 LU 82189**

(43) Date de publication de la demande:
**26.08.81 Bulletin 81/34**

(84) Etats contractants désignés:
**AT DE FR GB IT SE**

(71) Demandeur: **Centre de Recherches Metallurgiques Centrum voor research in de metallurgie Association sans but lucratif Vereniging zonder winstoogmerk Abbaye du Val-Benoît 11, rue Ernest Solvay B-4000 Liège(BE)**

(72) Inventeur: **Mairy, Bernard Rue Villette, 432 B-5110 Sclayn-Andenne(BE)**

(74) Mandataire: **Pirmolin, Guy Jean CENTRE DE RECHERCHES METALLURGIQUES 11, rue Ernest Solvay B-4000 Liège(BE)**

(54) Procédé perfectionné de protection du métal dans des récipients métallurgiques, et matériau pour la mise en oeuvre de ce procédé.

(57) Procédé de protection d'un métal liquide se trouvant dans un récipient métallurgique, caractérisé en ce que l'on constitue un mélange, à dues proportions, des différents constituants d'un matériau de protection, de composition déterminée, en ce qu'on soumet ce mélange à une opération de fusion, puis se trouvant à l'état pâteux, à une opération de mise à forme et en ce que sous cette forme, on dépose cette pâte sur la surface supérieure du métal à protéger dans le récipient métallurgique.

EP 0 034 379 A1

- 1 -

C 2004E/8101.

CENTRE DE RECHERCHES METALLURGIQUES -
CENTRUM VOOR RESEARCH IN DE METALLURGIE,
Association sans but lucratif -
Vereniging zonder winstoogmerk
à BRUXELLES, (Belgique).

Procédé perfectionné de protection du métal dans des
récipients métallurgiques, et matériau pour la mise
en oeuvre de ce procédé.

La présente invention se rapporte à un procédé perfectionné de protection du métal dans des récipients métallurgiques.

Par récipients métallurgiques, il faut dans la présente invention, comprendre toute espèce de récipient destiné à
contenir du métal liquide, tel que par exemple de la fonte
ou de l'acier, à l'exception des lingotières de coulée
continue. Parmi ceux-ci, nous pouvons citer : les lingotières ordinaires en chute ou en source, les paniers de
coulée continue, les différentes poches métallurgiques,
les convertisseurs, les mélangeurs à fonte, etc...

Dans les processus de coulée continue de l'acier, et spécialement dans le cas de la coulée de lingots de grosses sections, il est bien connu de recouvrir la surface supérieure liquide du lingot en cours de coulée d'un matériau de protection, généralement une fine poudre pour la lingotière et un matériau pulvérulent ou granuleux pour les autres récipients.

Le but de la présente invention est d'appliquer aux récipients métallurgiques ci-dessus définis, des procédés de protection par un matériau approprié, de la surface supérieure liquide du métal contenu dans les dits récipients, procédés déjà connus dans le cas de la lingotière de coulée continue, par l'usage de matériau de protection analogue.

Le rôle d'un tel matériau se trouvant sous forme de poudre est multiple, notamment assurer vis-à-vis de l'air une bonne isolation thermique de la surface supérieure du lingot, protéger cette surface contre l'oxydation, capter les inclusions présentes dans l'acier et, pour les lingotières statiques ou de coulée continue, servir de lubrifiant entre métal et paroi du récipient.

Les poudres ci-dessus mentionnées peuvent être préparées de multiples façons, notamment en effectuant des mélanges synthétiques de divers composants prébroyés, ou en fondant ensemble les divers composants de la poudre et en broyant ensuite le mélange fondu ainsi obtenu, après l'avoir refroidi.

Quelles que soient les qualités présentées par ces poudres, au point de vue de leur composition granulométrique et de leur efficacité relativement à la lubrification de la lingotière et à la protection du métal, elles n'en présentent pas moins un certain nombre d'inconvénients, inhérents à leur nature même de poudre.

Parmi ces inconvénients, on peut citer :

- l'existence de fines, qui sont susceptibles d'être perdues, depuis le stade de la fabrication jusqu'à celui de
l'utilisation et qui sont en outre un facteur d'insalubrité de travail,

- le transport des poudres qui, par ségrégation, cause nécessairement une altération dans l'homogénéité de leur composition.

La présente invention a pour objet un procédé grâce auquel
on peut non seulement éviter les inconvénients mentionnés
ci-dessus, mais en plus, réaliser la protection et l'isolation thermique du métal dans les récipients, de façon particulièrement avantageuse, facile et efficace.

Le procédé, objet de la présente invention, consiste essentiellement à effectuer un mélange à dues proportions des
différents constituants de la poudre considérée, mélange
que l'on soumet à une opération de fusion, puis se trouvant
à l'état pâteux, à une opération de mise à forme et en ce
que, sous cette forme, on dépose cette pâte sur la surface
supérieure liquide du métal à protéger se trouvant ou étant
en cours de versement dans le récipient considéré.

L'utilisation du matériau de couverture ainsi préparé à
partir de la poudre initiale est particulièrement intéressante au point de vue de l'homogénéité de celui-ci, de sa
facilité de transport et de mise en oeuvre (notamment l'
absence de fines ou de poussières).

Suivant une première modalité opérationnelle du procédé
ci-dessus, la mise à forme s'effectue sous l'état pâteux
à chaud, directement après la fusion et peut être suivie
elle-même d'un refroidissement avant utilisation.

La mise à forme peut conduire à l'obtention de produits
tels que des fibres (par filage), des granules, des rubans,

- 4 -　　　　　　　0034379

des plaquettes,utilisés comme tel, après refroidissement.

Suivant une seconde modalité opérationnelle du procédé ci-dessus, l'opération de fusion est suivie d'un refroidissement, d'un broyage, puis par mélange avec un liant, d'une mise sous état pâteux à froid. La mise à forme de la pâte froide ainsi constituée peut être effectuée directement au moment de la constitution de la pâte elle-même, sans qu'il soit nécessairement besoin de concevoir une opération particulière. Cette mise à forme de la pâte froide peut elle-même être suivie, avant utilisation, d'une opération de séchage avec ou sans apport d'un agent particulier favorisant le dit séchage.

La mise en oeuvre du matériau ainsi préparé peut s'effectuer de façon discrète ou continue, automatique ou non, en faisant usage du dit matériau, soit sous forme d'un ruban continu (quelle que soit la forme de la section), soit sous forme d'éléments distincts, qui spécialement dans le cas de la pâte malléable, favorisent la solidarisation in situ en une seule masse de celle-ci, au fur et à mesure de son dépôt sur le métal se trouvant dans le récipient métallurgique ou sur la couche de matériau s'y trouvant déjà. Le dépôt peut s'effectuer à partir d'une seule alimentation ou à partir de plusieurs, si la surface supérieure du récipient à garnir est importante.

Il ne sort pas du domaine de l'invention, de rendre vacuolaires ou poreux en cours de fabrication, les matériaux faisant l'objet du procédé ci-dessus décrit. Une telle opération peut s'effectuer soit par inoculation dans la matière fluide ou pâteuse d'un gaz approprié ou d'un matériau dégageant un gaz approprié, par exemple par dégagement ou décomposition gazeuse à chaud, en provenance des constituants du mélange ou des agents utilisés comme liants.

Les dits matériaux peuvent en outre être obtenus moulés, étirés, filés, extrudés..., ou sous une forme présentant un ou des creux de configuration quelconque. Cette variante permet d'accroître le pouvoir isolant thermique du dit matériau, spécialement lorsqu'il se trouve à l'état pâteux.

Il ne sort pas du domaine de l'invention, d'utiliser un mélange de ces matériaux, soit qu'ils présentent la même forme, soit qu'ils aient des formes différentes. On peut également faire appel en sus à un ou plusieurs matériaux à l'état fibreux, granuleux ou autre, tels que par exemple du carbone, du nitrure de bore, utilisés avec ou sans liant, et dans des proportions ne dépassant pas le plus souvent 20 % en poids du mélange total.

La présente invention a également pour objet de révéler quelques compositions préférentielles du dit matériau, compositions susceptibles de varier quelque peu selon la nature du récipient métallurgique auquel elles sont destinées.

Suivant le présent mémoire, le matériau de couverture peut compter jusqu'à 100 % de $SiO_2$, se présentant sous forme de silicate.

Dans le cas où l'on envisage de déposer le matériau de couverture sur un métal liquide se trouvant dans une poche ou dans un panier de coulée continue, les compositions pondérales préférentielles suivantes sont à retenir :

20 % $\leqslant$ $SiO_2$ $\leqslant$ 100 %, accompagné éventuellement
de CaO + MgO $\leqslant$ 60 %, et/ou
de $Al_2O_3$ $\leqslant$ 40 %, et/ou
de $Na_2O$ + $K_2O$ $\leqslant$ 15 %, et/ou
de carbone libre $\leqslant$ 30 %, et/ou
de MnO $\leqslant$ 10 %, et/ou

de $CO_2^-$ ⩽ 10 %, et/ou

de $Fe_2O_3$ ⩽ 10 %, et/ou

de $F^- + B_2O_3$ ⩽ 5 %.

Dans le cas où l'on envisage de déposer le matériau de couverture sur un métal liquide se trouvant dans une lingotière en source ou en chute, les compositions pondérales préférentielles suivantes sont à retenir :

20 % ⩽ $SiO_2$ ⩽ 70 %, accompagné éventuellement

de CaO + MgO ⩽ 50 %, et/ou

de $Al_2O_3$ + $TiO_2$ ⩽ 35 %, et/ou

de $Na_2O$ + $K_2O$ ⩽ 20 %, et/ou

de carbone libre ⩽ 32 %, et/ou

de MnO ⩽ 10 %, et/ou

de $CO_2^-$ ⩽ 15 %, et/ou

de $Fe_2O_3$ ⩽ 25 %, et/ou

de $F^- + B_2O_3$ ⩽ 12 %.

Les pourcentages ci-dessus (ainsi que ceux repris aux revendications) sont à calculer sur la base du poids des constituants mentionnés et non sur la base du poids de leurs combinaisons chimiques éventuelles. Ces constituants peuvent être utilisés, soit sous forme pure, soit sous forme de minéraux (avec ou sans combinaison chimique) de résidus inorganiques ou organiques etc..., la somme de tous les constituants atteignant bien entendu 100 %.

Il ne sort pas du domaine de l'invention de faire usage de composés (contenant des ions Ca, Mg, Al, Na, K, Mn, B, Fe, Ti) non nomenclaturés ci-dessus, pourvu que leur teneur, en les dits ions, ramenées aux oxydes susmentionnés, satisfassent aux conditions indiquées.

A noter que le carbone libre peut se présenter sous de multiples formes, par exemple charbon, graphite, suies, résidus divers, etc...

LIEGE, le 9 janvier 1981.

G. PIRMOLIN,

0034379

Revendications de brevet

1. Procédé de protection d'un métal liquide se trouvant dans un récipient métallurgique, caractérisé en ce que l'on constitue un mélange, à dues proportions, des différents constituants d'un matériau de protection, de composition déterminée, en ce qu'on soumet ce mélange à une opération de fusion, puis se trouvant à l'état pâteux, à une opération de mise à forme et en ce que sous cette forme, on dépose cette pâte sur la surface supérieure du métal à protéger dans le récipient métallurgique.

2. Procédé suivant la revendication 1, caractérisé en ce que la mise à forme s'effectue sous l'état pâteux à chaud, directement après la fusion, et est éventuellement suivie elle-même d'un refroidissement avant utilisation.

3. Procédé suivant les revendications 1 et 2, caractérisé en ce que la mise à forme conduit à l'obtention de produits tels que des fibres (par filage), des granules, des rubans, des plaquettes, etc...

4. Procédé suivant la revendication 1, caractérisé en ce que l'opération de fusion est suivie d'un refroidissement, d'un broyage puis, par mélange avec un liant, d'une mise sous état pâteux à froid.

5. Procédé suivant la revendication 4, caractérisé en ce que la mise à forme de la pâte ainsi préparée est effectuée au moment de la constitution de la pâte elle-même.

6. Procédé suivant l'une ou l'autre des revendications 4 et 5, caractérisé en ce que cette mise à forme de la pâte froide est suivie, avant utilisation, d'une opération de séchage, avec ou sans apport d'un agent particulier favorisant le dit séchage.

7. Procédé suivant l'une ou l'autre des revendications 1 à 6, caractérisé en ce que les dits matériaux sont rendus vacuolaires ou poreux en cours de fabrication, soit par inoculation, soit par dégagement ou décomposition gazeuse à chaud.

8. Procédé suivant l'une ou l'autre des revendications 1 à 7, caractérisé en ce que les matériaux sont produits sous une forme présentant un ou des creux de configuration quelconque.

9. Procédé de dépôt sur ou au-dessus du métal se trouvant dans la lingotière, des matériaux obtenus suivant l'une ou l'autre des revendications 1 à 8, caractérisé en ce que ce dépôt est de préférence effectué à partir de plusieurs sources d'alimentation, simultanément et de façon automatique.

10. Procédé suivant l'une ou l'autre des revendications 1 à 9, caractérisé en ce que le mélange des dits matériaux contient également un ou plusieurs composants, à l'état fibreux ou granuleux, ou autre, tels que du carbone et/ou du nitrure de bore, utilisés avec ou sans liant, et dans des proportions ne dépassant pas le plus souvent 20 % en poids du mélange total.

11. Matériau de couverture pour la mise en oeuvre des procédés repris aux revendications 1 à 10, caractérisé en ce qu'il est constitué en tout ou en partie de $SiO_2$, soit sous forme libre, soit sous forme de silicate.

12. Matériau suivant la revendication 11, caractérisé en ce qu'il est destiné à être utilisé dans un récipient métallurgique, constitué d'une poche ou d'un panier de coulée continue, le matériau de couverture comportant 20 % à 100 % de $SiO_2$.

13. Matériau suivant la revendication 12, caractérisé en ce qu'il contient en sus un ou plusieurs des constituants ci-après, et dans les proportions mentionnées :

$$CaO + MgO \leqslant 60 \%$$
$$Al_2O_3 \leqslant 40 \%$$
$$Na_2O + K_2O \leqslant 15 \%$$
$$carbone \ libre \leqslant 30 \%$$
$$MnO \leqslant 10 \%$$
$$CO_2^- \leqslant 10 \%$$
$$Fe_2O_3 \leqslant 10 \%$$
$$F^- + B_2O_3 \leqslant 5 \%.$$

14. Matériau suivant la revendication 11, caractérisé en ce qu'il comporte de 20 % à 70 % de $SiO_2$ et est destiné à être utilisé dans une lingotière en source ou en chute.

15. Matériau suivant la revendication 14, caractérisé en ce qu'il contient en sus un ou plusieurs des constituants ci-après, et dans les proportions mentionnées :

$$CaO + MgO \leqslant 50 \%$$
$$Al_2O_3 + TiO_2 \leqslant 35 \%$$
$$Na_2O + K_2O \leqslant 20 \%$$
$$carbone \ libre \leqslant 32 \%$$
$$MnO \leqslant 10 \%$$
$$CO_2^- \leqslant 15 \%$$
$$Fe_2O_3 \leqslant 25 \%$$
$$F^- + B_2O_3 \leqslant 12 \%.$$

---

LIEGE, le 9 janvier 1981.

G. PIRMOLIN,

**Office européen des brevets**

# RAPPORT DE RECHERCHE EUROPEENNE

Numero de la demande

EP 81 20 0034.7

| | DOCUMENTS CONSIDERES COMME PERTINENTS | | | CLASSEMENT DE LA DEMANDE (Int. Cl.³) |
|---|---|---|---|---|
| Catégorie | Citation du document avec indication, en cas de besoin, des parties pertinentes | Revendication concernée | | |
| X | BE - A - 873 057 (CNRM)<br><br>* revendications 1 to 9 *<br><br>-- | 1-9 | | C 21 C 7/076 |
| X | BE - A - 849 022 (CNRM)<br><br>* revendications 1 to 3 *<br><br>-- | 10-15 | | |
| X | DE - B - 1 233 106 (MANNESMANN)<br><br>* column 3, lignes 39 to 60 *<br><br>-- | 11-15 | | |
| A | DE - B2 - 2 333 915 (PA-HA-GE SCHMITZ KG)<br><br>----- | | | |

**DOMAINES TECHNIQUES RECHERCHES (Int. Cl.³)**

B 22 D 11/00
B 22 D 27/00
C 04 B 35/00
C 21 C 7/00

**CATEGORIE DES DOCUMENTS CITES**

X: particulièrement pertinent
A: arrière-plan technologique
O: divulgation non-écrite
P: document intercalaire
T: théorie ou principe a la base de l'invention
E: demande faisant interférence
D: document cité dans la demande
L: document cite pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 22-05-1981 | KESTEN |

OEB Form 1503.1 06.78